# EUROPÄISCHE PATENTSCHRIFT

(11) **EP 1 692 878 B1**
(45) Veröffentlichungstag und Bekanntmachung des Hinweises auf die Patenterteilung: **01.04.2015**
(21) Anmeldenummer: 04766614.4
(22) Anmeldetag: 26.08.2004
(51) Int. Cl.: H04Q 3/00, H04L 12/26, H04B 1/74, H04L 1/22

(54) **KONFIGURATION ZUM ERSATZSCHALTEN VON RÄUMLICH GETRENNTEN VERMITTLUNGSSYSTEMEN**
CONFIGURATION FOR SUBSTITUTE-SWITCHING SPATIALLY SEPARATED SWITCHING SYSTEMS
CONFIGURATION POUR RÉALISER LA COMMUTATION DE REMPLACEMENT DE SYSTÈMES DE COMMUTATION SÉPARÉS DANS L'ESPACE

(30) Priorität: 12.12.2003 DE 10358345
(43) Veröffentlichungstag der Anmeldung: 23.08.2006
(73) Patentinhaber: Nokia Solutions and Networks GmbH & Co. KG, 81541 Munich (DE)
(72) Erfinder: LÖBIG, Norbert, 64291 Darmstadt (DE); TEGELER, Jürgen, 82377 Penzberg (DE)
(74) Vertreter: Weidel, Gottfried
(86) Internationale Anmeldenummer: PCT/EP2004/051926
(87) Internationale Veröffentlichungsnummer: WO 2005/057949

(56) Entgegenhaltungen:
- DE-A- 3 235 661
- US-A1- 2002 152 320
- US-A1- 2002 188 713
- ARDON M T ET AL: "PROVIDING ULTRA-RELIABLE SERVICES USING DISTRIBUTED SWITCH ARCHITECTURES" PROCEEDINGS OF THE XIV INTERNATIONAL SWITCHING SYMPOSIUM, YOKOHAMA, JAPAN, Bd. 1, 25. Oktober 1992 (1992-10-25), Seiten 169-173, XP000337637
- DATABASE WPI Section EI, Week 200236 Derwent Publications Ltd., London, GB; Class W02, AN 2002-316315 XP002309764 & CN 1 321 004 A (HUAWEI TECH CO LTD) 7. November 2001 (2001-11-07)
- CUERVO F ET AL: "Megaco Protocol Version 1.0", IETF RFC 3015, November 2000 (2000-11), XP002285435,

## Beschreibung

Zeitgemäße Vermittlungssysteme (Switch) verfügen durch redundantes Bereitstellen wichtiger interner Komponenten über ein hohes Maß an interner Betriebssicherheit. Damit wird im Normalbetrieb (d.h. störungsfreier Betrieb, also keine äußeren Einwirkungen, kein langandauernder Stromausfall, usw.) eine sehr hohe Verfügbarkeit der vermittlungstechnischen Funktionen erreicht. Treten jedoch massive äußere Einwirkungen auf (z.B. Feuer, Naturkatastrophen, Terroranschläge, kriegerische Einwirkungen etc.), so nutzen die getroffenen Vorkehrungen zur Erhöhung der Betriebssicherheit in der Regel wenig, weil Original- und Ersatzkomponenten des Vermittlungssystems sich am gleichen Ort befinden und damit in einem solchen Katastrophenfall mit hoher Wahrscheinlichkeit beide Komponenten zerstört bzw. funktionsunfähig geworden sind.

Die Folge ist ein lang anhaltender Totalausfall, wie dies auch am 11. September 2001 in New York der Fall war. Hinzu kommen dann noch erhebliche logistische und technische Aufwendungen sowie in erheblichem Masse Expertenwissen, um in einem solchen Fall die ausgefallene Kommunikationsfunktion wieder bereitzustellen. Dies bedeutet in der Praxis, dass der tatsächliche Ausfall erheblich länger dauern kann, als dies technisch notwendig gewesen wäre. Als Folge können finanzielle Verluste in enormer Größenordnung bis zur Lähmung der Wirtschaftsaktivitäten oder annäherndem Zusammenbruch der Infrastruktur gerade im Falle kleinerer Länder entstehen.

Diese Abhängigkeit/ Verwundbarkeit einer Organisation/ Gesellschaft von einer funktionierenden Kommunikation könnte Vermittlungssysteme zu einem attraktiven Ziel für terroristische Anschläge oder auch kriegerische Angriffe machen.

Als Lösung wird beim Stand der Technik eine geographische Redundanz vorgeschlagen, wonach ein redundantes Vermittlungssystem im Netz für eine Mehrzahl von Vermittlungssystemen vorzusehen ist (1:n Redundanz). Damit existiert aus Sicht der Hardware ein komplettes, redundantes Vermittlungssystem, das sich im Normalfall im Zustand "offline" befindet und eine leere Datenbasis beinhaltet. Es ist so ausgelegt, dass es mit seiner Hardwarekonfiguration ein ausgefallenes Vermittlungssystem ersetzen kann. Weist also eines der n Vermittlungssysteme einen Totalausfall auf, so wird auf die jüngste Sicherung seiner Datenbasis zurückgegriffen, und das redundante Vermittlungssystem wird mit dieser Datenbasis in Betrieb genommen. Nach erfolgreichem Hochfahren kann dieses die Funktion des ausgefallenen Vermittlungssystems übernehmen.

Zwar wird mit diesem Vorschlag lediglich ein einziges redundantes Vermittlungssystem für weitere n Vermittlungssysteme benötigt, womit ein vergleichsweise geringer Aufwand des Netzbetreibers für die Bereitstellung einer geographischen Redundanz erforderlich ist. Dieser Vorteil ist aber mit einer Reihe gravierender Nachteile verbunden:

So ist es zwingend erforderlich, dass die jüngste Sicherung der Datenbasis des ausgefallenen Vermittlungssystems unversehrt geblieben bzw. unversehrt zum Standort des redundanten Vermittlungssystems transferiert worden ist. Um dies zu erreichen, müssen im Normalbetrieb in kurzen zeitlichen Abständen (z.B. jede Woche) Abzüge der Datenbasen aller theoretisch zu ersetzenden Vermittlungssysteme zu dem redundanten Vermittlungssystem transferiert werden oder schnell dorthin transferierbar sein. Dies bedeutet, wie auch immer es technisch gelöst wird, einen erheblichen Aufwand und damit erhebliche, regelmäßig anfallende Kosten.

Aber auch wenn die jüngste Sicherung der Datenbasis unversehrt eingespielt worden ist, wird dies in der Regel nie das hundertprozentige Abbild der Datenbasis des ausgefallenen Vermittlungssystems sein. So können in der Zwischenzeit seit der letzten Sicherung administrative/ konfigurative Veränderungen oder Teilnehmerselbsteingaben in die Datenbasis eingegeben worden sein, die jetzt fehlen. Gleiches gilt für die für den Netzbetreiber wichtigen Gebühreninformationen. Besonders problematisch hieran ist, dass das Delta zwischen der beim Ausfall aktuellen Datenbasis und der Datenbasis der jüngsten Sicherung i.a. unbekannt ist und damit auch eine völlige Restaurierung nicht möglich ist. Damit besteht die Gefahr, dass die gesicherte (alte) Datenbasis inkonsistent zu den Datenbasen der Partner Vermittlungssysteme sein kann, was gegebenenfalls zu einer vermittlungstechnischen Nichtbedienbarkeit von Teilnehmern und Trunks führt. Das erfolgreiche Hochfahren eines redundanten Vermittlungssystems stellt also noch lange nicht seinen störungsfreien Betrieb bis auf Teilnehmer/ Leitungsebene sicher.

Zusätzlich kommt noch hinzu, dass das redundante Vermittlungssystem bei allen Erweiterungs- und Umbaumaßnahmen der anderen Vermittlungssysteme mitbetrachtet werden muss. Es muß so aus- und aufgebaut sein, dass die Datenbasis der übrigen Vermittlungssysteme dort ohne Einschränkung oder Manipulation zugreifbar wird. Auch die Performanzanforderungen müssen durch das redundante Vermittlungssystem in gleicher Weise oder besser abgedeckt werden. Dies alles bedeutet, dass der Netzbetreiber mit zusätzlicher Komplexität in der Netzplanung und im Engineering der Switches des Netzes konfrontiert ist, wobei er darüber hinaus noch an den gleichen Hersteller im Bereich der Redundanz-Einheit gebunden ist.

Aus der Druckschrift US 2002/152320 A1 (LAU P L), 17. Oktober 2002 (2002-10-17), sind ein System und ein Verfahren bekannt für schnelles Umschalten zwischen redundanten Netzen, welche eine primäre Netzsteuerung umfassen, eine Mehrzahl von Netzgeräten, welche mit der primären Netzsteuerung durch einen primären Netzpfad verbunden sind, und zumindest einen vorbestimmten Ersatznetzpfad. Wenn der primäre Netzpfad aktiv ist, blockiert die Netzsteuerung die vorbestimmten Ersatznetzpfade. Wenn der primäre Netzpfad jedoch ausfällt, blockiert die primäre Netzsteuerung den ausgefallenen primären Netzpfad und schaltet um auf einen der vorbestimmten Ersatznetzpfade.

Aus der Druckschrift Database WPI Section EI, Week 200236 Thomson Scientific, London, GB; Class W02, AN 2002-316315 & CN 1 321 004 A (HUAWEI TECH CO LTD) 7. November 2001 (2001-11-07), sind ein Verfahren und eine Vorrichtung zum Umschal ten zwischen Host und Standby Switches bekannt. Es sind ein Host Main Control Board und ein Standby Main Control Board und ein Host Network Switch Board und ein Standby Network Switch Board vorhanden. Zwei MainControlBoards sind gegenseitig Realzeit kommuniziert, und sie haben gleiche Daten, um hot standby zu implementieren. Ihr Umschalten ist in gegenseitigem Überwachungs- und Steuerungsmodus. Zwei Network Switch Boards laufen synchron für hot standby. Vorteile sind schnelles und sicheres Umschalten.

Die Druckschrift ARDON M ET Al:"PROVIDING ULTRA-RELIABLE SERVICES USING DISTRIBUTED SWITCH ARCHITECTURES" Proceedings of the XIV INTERNATIONAL SWITCHING SYMPOSIUM, YOKOHAMA, JAPAN, Bd. 1, 25. Oktober 1992 (1992-10-25), Seiten 169-173, untersucht verschiedene ultra-zuverlässige Dieristtechniken. Die Bedürfnisse von Kunden und Dienstanbieter auf dem Gebiet von ultra-zuverlässigen Diensten werden beschrieben und klassifiziert. Dienstschutztechniken werden diskutiert, welche digitale abgesetzte Einrichtungen mit und ohne autonome Vermittlungsfähigkeit nutzen. Schlüsselplattformen und Architekturelemente werden untersucht, welche beteiligt sind, Kundenzuverlässigkeitsbedürfnisse zu befriedigen.

Aus der Druckschrift US 2002/188713 A1 (BLOCH J ET AL) 12. Dezember 2002 (2002-12-12) ist ein vermittlungstechnisches Verfahren bekannt, bei dem Steuerungssignale über ein local area network von einer zentralen Steuerung zu jedem Prozessor einer Mehrzahl von dezentralen Prozessoren geleitet werden. Das Verfahren schließt auch ein, dass jeder Prozessor der Mehrzahl der dezentralen Prozessoren als Antwort auf die Steuerungssignale dezentralisierte vermittlungstechnische Funktionen ausführt.

Das Dokument CUERVO F ET AL: "Megaco Protocol Version 1.0" IETF RFC 3015 November 2000 (2000-11) definiert ein Protokoll, welches zwischen Elementen eines physikalisch zerlegten Multimedia Gateways genutzt wird. Die Protokolldefinition des Dokuments beruht auf einem mit der ITU-T Empfehlung H.248 gemeinsamen Text.

Der Erfindung liegt daher die Aufgabe zugrunde, eine Netzstruktur anzugeben, wie eine geographische Redundanz von Vermittlungssystemen weiterzubilden ist, um im Fehlerfall das effiziente Umschalten eines ausgefallenen Vermittlungssystems auf einen Redundanzpartner sicherstellen zu können.

Diese Aufgabe wird ausgehend von den im Oberbegriff von Patentanspruch 1 angegebenen Merkmalen durch die im kennzeichnenden Teil beanspruchten Merkmale gelöst.

Ein wesentlicher Vorteil der Erfindung ist darin zu sehen, dass die Umschaltung schnell, sicher und automatisch geschieht, wobei es keine Rolle spielt, ob das ersatzzuschaltende Vermittlungssystem paketbasierte und/ oder TDM-basierte Schnittstellen aufweist. Dies wird dadurch erreicht, indem jedem zu schützenden Vermittlungssystem ein identischer Klon als Redundanzpartner mit identischer Hardware, Software und Datenbasis zugeordnet ist. Der Klon befindet sich im hochgefahrenen Zustand, ist aber trotzdem vermittlungstechnisch nicht aktiv. Damit ist eine hochverfügbare, über mehrere Lokationen verteilte 1:1 Redundanz von Vermittlungssystemen definiert. Das aktive Vermittlungssystem und sein Redundanzpartner werden über das Paketnetz von einem abgesetzten, übergeordneten realzeitfähigen (d. h. im Sekundenbereich) Monitor gesteuert. Dieser kann aus Hardware und/oder Software bestehen. Die Voraussetzung für eine möglichst sichere Lösung besteht hierbei in einer deutlichen räumlichen Trennung von aktivem Vermittlungssystem und seinem Redundanzpartner, des Managementsystems und des Monitors.

Ferner wird im Rahmen der Ersatzschaltung eine den Kommunikationspartnern sichtbare Adressänderung bedarfsweise vermieden. Dadurch entsteht eine nur kurze Nichtverfügbarkeit aus Sicht der Teilnehmer und Verbindungsleitungen, womit die Voraussetzung für das Retten stabiler Verbindungen im Rahmen der Ersatzschaltung geschaffen sind. Schließlich gehen nach Möglichkeit keine Gebührendaten und Teilnehmerselbsteingaben verloren, bzw. entstehen keine falsche Gebühren.

Ein weiterer Vorteil der Erfindung ist in der Einführung eines neuen "hot standby" Zustandes für Vermittlungssysteme zu sehen. Dieser ist durch das Vorhandensein einer aktuellen Datenbasis, aktive Applikationen, insbesondere vermittlungstechnische Prozesse, sowie durch das Blockieren aller vermittlungstechnischer Interfaces des Klons nach aussen geprägt. Dies bedeutet, die volle Aktivität aller Komponenten bis auf die paketbasierten Interfaces (und eventuell die Bearbeitung vermittlungstechnischer Anreize).

Grundsätzlich ist mit einer derartigen Lösung die Erfindung auch auf einen reinen Softswitch, einen reinen TDM Switch wie auch die ganze Spanne der Misch-Konfigurationen (Hybrid Switche) anwendbar.

Vorteilhafte Weiterbildungen der Erfindung sind in den abhängigen Ansprüchen angegeben.

Die Erfindung wird im folgenden anhand eines figürlich dargestellten Ausführungsbeispiels näher erläutert.

Es zeigen:
- Figur 1: die Netzkonfiguration gemäss der Erfindung im Falle eines lokal redundanten Monitors
- Figur 2: die Netzkonfiguration gemäss der Erfindung im Falle eines geographisch und lokal redundanten Monitors

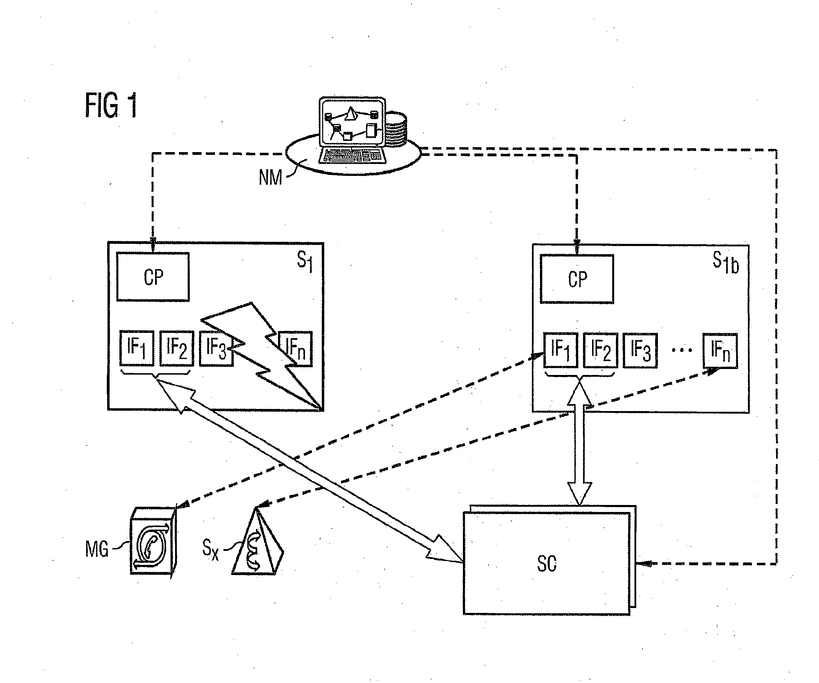

In Fig. 1 ist eine Konfiguration gemäss der Erfindung aufgezeigt. Demgemäss ist vorgesehen, jedem zu schützenden Vermittlungssystem (z. B. S₁) einen identischen Klon als Redundanzpartner (z. B. S_{1b}) mit identischer Hardware, Software und Datenbasis zuzuordnen. Der Klon befindet sich im hochgefahrenen Zustand, ist aber trotzdem vermittlungstechnisch nicht aktiv (Betriebszustand "hot standby"). Damit ist eine hochverfügbare, über mehrere Lokationen verteilte 1:1 Redundanz von Vermittlungssystemen definiert.

Falls die Vermittlungssysteme S₁, S_{1b} TDM Anteile aufweisen, ist zusätzlich mindestens eine Crossconnect-Vorrichtung CC erforderlich, die den gesamten TDM Verkehr zwischen Vermittlungssystem S₁ und redundantem Vermittlungssystem S_{1b} umschalten kann. Die TDM Strecken des Vermittlungssystems S₁ treten im Normalbetrieb am Punkt CC₁ der Crossconnect-Vorrichtung CC ein bzw. aus und am Punkt CCₐ wieder aus bzw. ein. Die TDM Strecken des Vermittlungssystems S_{1b} treten am Punkt CC_{1b} in die Crossconnect-Vorrichtung CC ein bzw. haben dort in Rückrichtung ihren Ursprung. Eine Durchschaltung erfolgt jedoch nicht.

Beide Vermittlungssysteme (Vermittlungssystem S₁ und der Klon oder Redundanzpartner S_{1b}) werden gemäss Fig. 1 von demselben Netzwerkmanagementsystem NM gesteuert. Die Steuerung erfolgt derart, dass der aktuelle Stand von Datenbasis und Software beider Vermittlungssysteme S₁, S_{1b} identisch gehalten wird. Dies wird erreicht, indem jedes betriebstechnische Kommando, jedes Konfigurationskommando und jedes Software-Update inklusive Patches identisch an beide Partner ausgebracht wird. Damit wird ein räumlich abgesetzter, identischen Klon zu einem in Betrieb befindlichen Switch mit identischer Datenbasis und identischem Softwarestand definiert.

Die Datenbasis beinhaltet grundsätzlich alle semipermanenten und permanenten Daten. Hierbei werden unter permanenten Daten die Daten verstanden, die als Code in Tabellen abgelegt sind und die sich nur per Patch oder Software-Update ändern lassen. Unter semipermanenten Daten werden die Daten verstanden, die z. B. über die Bedienerschnittstelle in das System gelangen und die für längere Zeit dort in der Form der Eingabe gespeichert sind. Mit Ausnahme der Konfigurationszustände des Systems werden diese Daten i.a. vom System nicht selbst verändert. Nicht in der Datenbasis enthalten sind die einen Ruf begleitenden transienten Daten, die das Vermittlungssystem nur kurzzeitig speichert und die über die Dauer eines Calls hinaus i.a. keine Bedeutung haben oder Zustandsinformationen, die transiente Überlagerungen/ Ergänzungen von konfigurativ vorgegebenen Grundzuständen sind (So könnte ein Port zwar im Grundzustand aktiv sein, aber wegen einer transienten (vorübergehenden) Störung momentan nicht zugreifbar sein).

Im weiteren verfügen die Vermittlungssysteme S₁, S_{1b} beide über mindestens ein aktives, paketorientiertes Interface zum gemeinsamen Netzwerkmanagementsystem NM. Dies sollen gemäss Fig. 1 die beiden Interfaces IF₁ sein. Die beiden Interfaces IF₁ nehmen dabei einen aktiven Betriebzustand ("act") ein. Während aber beim Vermittlungssystem S₁ auch alle verbleibenden paketorientierten Interfaces IF₂...IFₙ aktiv sind, sind beim Vermittlungssystem S_{1b} hingegen die verbleibenden Interfaces im Betriebzustand "idle". Der Zustand "idle" bedeutet, dass die Interfaces keinen vermittlungstechnischen Nachrichtenaustausch erlauben, aber von außen, d.h. durch eine außerhalb von Vermittltingssystem S₁ und Vermittlungssystem S_{1b} gelegenen, übergeordneten realzeitfähigen Monitor aktiviert werden können. Der Monitor kann in Hardware und/oder Software realisiert sein, und schaltet im Fehlerfall in Realzeit auf den Klon um. Realzeit bedeutet hier eine Zeitspanne von wenigen Sekunden. Abhängig von der Qualität des Netzes kann auch eine höhere Umschalteerkennungszeitspanne definiert werden. Gemäss Fig. 1 ist der Monitor als Steuereinrichtung SC und aus Sicherheitsgründen gedoppelt (lokale Redundanz).

Die Interfaces Iₙ sind paketbasiert und stellen somit Kommunikationsschnittstellen zu paketbasierten Peripherieeinrichtungen (wie z. B. IAD, SIP Proxy-Einrichtungen), fernen paketbasierte Switches (Sₓ), paketbasierten Media Servern (MG) dar. Wie Fig. 1 entnommen werden kann, werden sie mittelbar von der Steuereinrichtung SC (Switch Controller, SC) gesteuert. Dies bedeutet, dass die Steuereinrichtung SC die Interfaces IFₙ aktivieren und deaktivieren, und somit beliebig zwischen den Betriebszuständen "act" und "idle" hin- und herschalten kann.

Die Konfiguration gemäss Fig. 1 soll die Default Konfiguration darstellen. Dies bedeutet, dass Vermittlungssystem S₁ vermittlungstechnisch aktiv ist, während sich Vermittlungssystem S_{1b} sich in einem Betriebszustand "hot standby" befindet. Dieser Zustand ist durch eine aktuelle Datenbasis und volle Aktivität aller Komponenten bis auf die paketbasierten Interfaces (und eventuell die Bearbeitung vermittlungstechnischer Anreize) geprägt. Das (geographisch redundante) Vermittlungssystem S_{1b} kann somit von der Steuereinrichtung SC durch Aktivierung der Interfaces IF_{2..n} schnell in den vermittlungstechnisch aktiven Zustand überführt werden.

Falls vom Vermittlungssystem S₁ TDM Informationsströme gesendet/ empfangen werden, ist eine Crossconnect-Vorrichtung CC notwendig. Diese verfügt ebenfalls über (mindestens) ein paketbasiertes (jederzeit aktives) Interface IF_{cc} und ist sowohl mit dem Netzwerkmanagement NM als auch optional mit der Steuereinrichtung SC verbunden. Steuereinrichtung SC und Netzwerkmanagement NM haben jederzeit die Möglichkeit, die Crossconnect-Vorrichtung CC umzuschalten (die Steuereinrichtung SC für den Normalfall, das Netzwerkmanagementsystem NM für Notfälle). Als wesentlicher Aspekt ist anzusehen, dass die beiden geographisch redundanten Vermittlungssysteme S₁, S_{1b} sowie das Netzwerkmanagement NM und die gedoppelte Steuereinrichtung SC jeweils räumlich deutlich getrennt sein müssen.

Die Steuereinrichtung SC übermittelt dem Netzwerkmanagement NM regelmäßig oder bedarfsweise auf Anforderung den aktuellen Betriebszustand der Vermittlungssysteme S₁ und S_{1b} (act/ standby, Zustand der Interfaces) sowie den eigenen Betriebszustand. Die Funktionen der Steuereinrichtung SC können optional teilweise oder auch komplett vom Netzwerkmanagement NM durchgeführt werden. Aus Sicherheitsgründen sollte das Netzwerkmanagement NM die Funktion haben, die oben beschriebenen Umschaltungen auch manuell herbeiführen zu können. Optional kann die automatische Umschaltung blockiert werden, so dass die Umschaltung nur manuell durchgeführt werden kann.

Die Vermittlungssysteme S₁ und S_{1b} können regelmäßig auch selbst überprüfen, ob ihre paketbasierten Interfaces aktiv sind. Ist dies für die Interfaces IF_{2..n} nicht der Fall, kann man indirekt auf den Zustand "hot standby" schließen und gezielt gewisse Alarme, die sich aus der Nicht-Verfügbarkeit der Interfaces IF_{2..n} ergeben, blockieren. Weiterhin kann auf diese Weise auch der Übergang eines Switches von "hot stand-by" auf "aktiv" erkannt werden. Dies ermöglicht, gegebenenfalls gezielte Maßnahmen beim Start des Vermittlungsverkehrs zu ergreifen.

Um das Umschalten von Vermittlungssystem S₁ auf Vermittlungssystem S_{1b} möglichst sicher und genau dann durchzuführen, wenn ein schwerwiegender Ausfall von Vermittlungssystem S₁ vorliegt, wird empfohlen, dass die paketbasierten Interfaces des Switches von selbst in den Zustand "idle" gehen, wenn sie den Kontakt zu ihrer Zentral-Einheit (falls vorhanden) verloren haben.

Die Paket-Adressen (IP Adressen) der Interfaces I_{2..n} des Vermittlungssystems S₁ und ihrer jeweiligen Partner Interfaces von Vermittlungssystem S_{1b} können identisch sein, müssen es aber nicht. Wenn sie identisch sind, wird das Umschalten nur von vorgeschalteten Routern bemerkt. Für die Partner-Applikation im Netz ist es dagegen völlig transparent. Man spricht in diesem Zusammenhang auch von der IP Failover Funktion. Falls das Protokoll, das ein Interface bedient, ein Umschalten des Kommunikationspartners auf eine andere Paket-Adresse erlaubt, wie dies z.B. beim H.248 Protokoll der Fall ist (ein Media Gateway kann selbständig eine neue Verbindung zu einem anderen Media Gateway Controller mit anderer IP Adresse herstellen), können die IP Adressen auch unterschiedlich sein.

Falls das Umschalten von Vermittlungssystem S₁ auf Vermittlungssystem S_{1b} durch ein Netzproblem hervorgerufen wurde und Vermittlungssystem S₁ hardwaremäßig in Ordnung ist, ist das Umschalten ebenfalls die korrekte Maßnahme, weil Vermittlungssystem S₁ nicht mehr ausreichend erreichbar war und damit vermittlungstechnisch möglicherweise ein wesentlicher Ausfall vorlag. Die Steuereinrichtung SC sollte dabei möglichst so mit dem Netz verbunden sein, dass ein,isolierter Ausfall der Verbindung des Vermittlungssystems S₁ zur Steuereinrichtung SC faktisch ausgeschlossen werden kann, während das Vermittlungssystem S₁ noch vermittlungstechnisch erreichbar ist. Die Umschaltung der Betriebszustände von Vermittlungssystem S₁ und Vermittlungssystem S_{1b} (act -> stb / stb -> act) kann auch durch die Zentralteile (CP) der Switches koordiniert werden.

In einer Ausgestaltung der Erfindung wird vorgesehen, als Steuereinrichtung SC den Zentralrechner eines weiteren Vermittlungssystems zu verwenden. Damit existiert dann eine Steuereinrichtung mit höchster Verfügbarkeit. Ferner kann die Funktionalität der Steuereinrichtung SC auf das reine Erkennen der Notwendigkeit des Ersatzschaltefalles reduziert werden. Damit wird die Initiierung des Umschaltens über das Netzwerkmanagement NM, also auf den Bediener verlagert, womit dann auch vorgelagerte Multiplexer und Crossconnect-Vorrichtungen nicht mehr von der Steuereinrichtung SC gesteuert werden müssen.

In einer Weiterbildung der Erfindung kommt die Etablierung einer unmittelbaren Kommunikationsschnittstelle zwischen Vermittlungssystem S₁ und Vermittlungssystem S_{1b} in Betracht. Diese kann zum Update der Datenbasis z. B. im Hinblick auf SCI -(Subscriber Controlled Input) und Gebühren-Daten genutzt werden sowie auch zum Austausch transienter Daten von einzelnen Verbindungen oder wesentlichen weiteren transienten Daten (z. B. H.248 Association Handle). Damit sind die Störungen des Betriebs aus Teilnehmer- und Betreibersicht minimierbar.

Die semipermanenten und transienten Daten können dann von dem jeweiligen aktiven Vermittlungssystem in das redundante standby Vermittlungssystem in einem zyklischen Zeitraster (Update) oder nach Ausfallende komplett übertragen werden. Das Update der SCI-Daten hat den Vorteil, dass das zyklische Restore auf dem standby-System vermieden wird und jederzeit Aktualität bzgl. SCI Daten im standby System herrscht.

Durch das Update Stack-relevanter Daten, wie dem H.248 association handle, kann der Peripherie die Übernahme der Peripherie durch ein Ersatzsystem verborgen werden, und es können die Ausfallzeiten noch stärker reduziert werden.

Das Kontrollprotokoll zwischen Steuereinrichtung SC und Crossconnect-Einrichtung CC kann ein normales OAM Protokoll sein (z.B. SNMP) und kann dem vom Netzwerkmanagement NM entsprechen.

Im folgenden sei nun von einem schwerwiegender Ausfall des Vermittlungssystem S₁ ausgegangen. Aufgrund der geographischen Redundanz ist mit hoher Wahrscheinlichkeit der Klon (Vermittlungssystem S_{1b}) ebenso nicht betroffen wie die Steuereinrichtung SC. Die Steuereinrichtung SC stellt den Ausfall von Vermittlungssystem S₁ fest, da hinreichend viele Interfaces von Vermittlungssystem S₁ nicht mehr antworten.

Die Steuereinrichtung SC schaltet nun auf das Bemerken des Ausfalls von Vermittlungssystem S₁ hin das geographisch redundante Vermittlungssystem S_{1b} in einen aktiven Betriebszustand und deaktiviert die Reste des ausgefallenen Vermittlungssystems S₁. Dieses geht nach Reparatur/ recovery in den Betriebszustand "hot standby". Gegebenenfalls sind manuelle Eingriffe nötig, um beim Hochfahren von Vermittlungssystem S₁ die aktuelle Datenbasis von Vermittlungssystem S_{1b} zu laden. Falls beide Steuereinrichtungen SC zerstört sind, kann das Umschalten auch vom Netzwerkmanagement NM aus manuell durchgeführt werden.

Dasselbe Verfahren funktioniert auch in den beiden Spezialfällen "reiner Softswitch" und "reiner TDM Switch". In ersterem Fall muss man sich nur den Crossconnect-Vorrichtung CC und das zugehörige Handling wegdenken. In letzterem Fall gibt es nur ein paketbasiertes Interface, nämlich das zum Netzwerkmanagement NM. Entsprechend wird nur dieses Interface von der Steuereinrichtung SC überwacht und als Umschaltekriterium hergenommen. Aus Sicherheitsgründen sollte es für diese Anwendung physikalisch gedoppelt werden. Hat man einen reinen TDM Switch, der über gar kein paketbasiertes Interface verfügt, muss er um ein solches, physikalisch gedoppeltes Interface erweitert werden, das ausschließlich der Überwachung durch Steuereinrichtung SC dient.

Die erfindungsgemässe Lösung ist auch auf eine gestörte Kommunikation zwischen Vermittlungssystem S₁ und Steuereinrichtung SC anwendbar, solange das Vermittlungssystem S₁ noch als Plattform funktionsfähig ist. Die Steuereinrichtung SC erreicht das Vermittlungssystem S₁ über dieselben Router wie der Vermittlungsverkehr. Dazwischen liegt lediglich das IP core Netz. In diesem Fall hat die Steuereinrichtung SC keinen Kontakt zum Vermittlungssystem S₁, wohl aber zum Vermittlungssystem S_{1b}. Das Vermittlungssystem S₁ ist aber noch vermittlungstechnisch aktiv und hat Kontakt zu seinen vermittlungstechnischen Netzpartnern. Die Steuereinrichtung SC aktiviert nun nach Bemerken eines (vermeintlichen) Ausfalls von Vermittlungssystem S₁ das redundante Vermittlungssystem S_{1b}, kann aber Vermittlungssystem S₁ nicht deaktivieren.

Das Vermittlungssystem S₁ hat aktive Interfaces IF und beantwortet die ARP requests der ihm vorgelagerten Router. Vermittlungssystem S_{1b} hat aber auch aktive Interfaces IF and beantwortet die ARP requests seiner vorgelagerten Router. Damit wären u. U. gleiche IP Adressen doppelt vergeben (Split Brain).

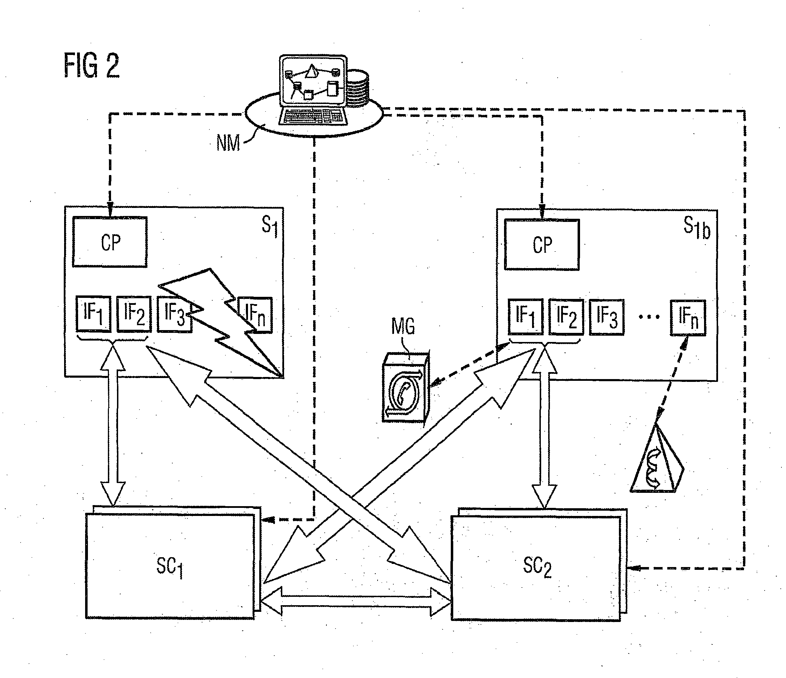

In Fig. 2 ist eine Weiterbildung gemäss der Konfiguration nach Fig. 1 aufgezeigt. Demgemäss sind zwei Steuereinrichtungen SC₁, SC₂ vorgesehen. Der Unterschied zu der in Fig. 1 aufgezeigten Konfiguration liegt im Vorsehen zweier Steuereinrichtungen SC₁ und SC₂, die an verschiedenen Orten untergebracht sind. Die Steuereinrichtung SC besteht somit aus zwei Hälften SC₁ und SC₂. Steuereinrichtung SC₁ ist mit Vermittlungssystem S₁, S_{1b} und der redundanten Steuereinrichtung SC₂ verbunden. Steuereinrichtungen SC₂ ist ebenso mit Vermittlungssystem S₁, S_{1b} und der zu ihr redundanten Steuereinrichtung SC₁ verbunden. Die beiden (räumlich getrennten) Steuereinrichtungen SC₁ und SC₂ überwachen sich gegenseitig.

## Patentansprüche

1. Vorrichtung zum Ersatzschalten eines Vermittlungssystems, **dadurch gekennzeichnet**,
dass jedem Vermittlungssystem (S₁) ein redundantes Vermittlungssystem (S_{1b}) als Redundanzpartner zugeordnet ist, die beide Zugriff auf ein Transportnetz haben,
dass ein Netzwerkmanagementsystem (NM) und mindestens ein realzeitfähiger Monitor (SC) vorgesehen sind, die in Wirkverbindung miteinander sowie mit jedem der Vermittlungssysteme (S₁), den jeweils redundanten Vermittlungssystemen (S_{1b}) und dem Transportnetz stehen,
dass das Vermittlungssystem (S₁) und das jeweils redundante Vermittlungssystem (S_{1b}) paketbasierte Interfaces aufweisen, wobei das jeweils redundante Vermittlungssystem (S_{1b}) von dem mindestens einen realzeitfähigen Monitor (SC) durch Aktivierung der paketbasierten Interfaces in einen vermittlungstechnisch aktiven Zustand überführt werden kann,
dass die Paket-Adressen (IP-Adressen) der paketbasierten Interfaces des Vermittlungssystems (S₁) und der jeweiligen paketbasierten Partner Interfaces des redundanten Vermittlungssystems (S_{1b}) identisch sind,
dass eine deutliche räumliche Trennung von dem Vermittlungssystem (S₁) und dem jeweils redundanten Vermittlungssystem (S_{1b}), des Netzwerkmanagementsystems (NM) und des mindestens einen realzeitfähigen Monitors (SC) besteht.

2. Vorrichtung nach Anspruch 1,
**dadurch gekennzeichnet**,
dass das Vermittlungssystem (S₁) sowie das redundante Vermittlungssystem (S_{1b}) einen identischen Aufbau in Hardware und Software aufweisen.

3. Vorrichtung nach Anspruch 1, 2,
**dadurch gekennzeichnet**,
dass die Datenbasis des Vermittlungssystem (S₁) sowie des redundanten Vermittlungssystem (S_{1b}) im Hinblick auf permanente/ semipermanente Daten zu jedem Zeitpunkt im wesentlichen identisch ist.

4. Vorrichtung nach Anspruch 1 bis 3,
**dadurch gekennzeichnet**,
dass die aus Vermittlungssystem (S₁), redundantem Vermittlungssystem (S_{1b}), Netzwerkmanagementsystem (NM) und dem mindestens einen Monitor (SC) ausgebildete Konfiguration über mehrere Lokationen verteilt ist.

5. Vorrichtung nach Anspruch 1 bis 4,
**dadurch gekennzeichnet**,
dass das Vermittlungssystem (S₁) und das jeweils redundante Vermittlungssystem (S_{1b}) TDM Schnittstellen aufweisen.

6. Vorrichtung nach einem der vorstehenden Ansprüche,
**dadurch gekennzeichnet**,
dass das redundante Vermittlungssystem (S_{1b}) einen Betriebszustand (hot-standby) einnimmt, der durch das Vorhandensein einer im wesentlichen aktuellen Datenbasis, aktive Applikationen sowie durch das Blockieren aller vermittlungstechnisch genutzten paketbasierten Interfaces nach aussen geprägt ist.

7. Vorrichtung nach einem der vorstehenden Ansprüche,
**dadurch gekennzeichnet**,
dass das Transportnetz mindestens eine durch NM oder SC steuerbare Crossconnect Vorrichtung (CC) zum Durchschalten von TDM Verbindungen aufweist.

8. Vorrichtung nach Anspruch 7,
wobei die Crossconnect Vorrichtung (CC) geeignet ist, den gesamten TDM Verkehr zwischen dem Vermittlungssystem (S₁) und dem jeweils redundanten Vermittlungssystem (S_{1b}) umzuschalten.

9. Vorrichtung nach einem der vorstehenden Ansprüche,
**dadurch gekennzeichnet**,
dass das Transportnetz eine unmittelbare Kommunikationsschnittstelle zwischen Vermittlungssystem (S₁) und Vermittlungssystem (S_{1b}) aufweist.

10. Vorrichtung nach Anspruch 9,
wobei die unmittelbare Kommunikationsschnittstelle genutzt werden kann zum Update der Datenbasis im Hinblick auf SCI- und Gebühren-Daten sowie zum Austausch transienter Daten von einzelnen Verbindungen oder wesentlichen weiteren transienten Daten.

11. Vorrichtung nach einem der vorstehenden Ansprüche,
**dadurch gekennzeichnet**,
dass der mindestens eine realzeitfähige Monitor (SC) außerhalb von dem Vermittlungssystem (S₁) und dem jeweils redundanten Vermittlungssystem (S_{1b}) liegt.

12. Vorrichtung nach einem der vorstehenden Ansprüche,
**dadurch gekennzeichnet**,
dass der mindestens eine realzeitfähige Monitor SC) aus zwei Steuereinrichtungen (SC₁, SC₂) besteht,
wobei die beiden Steuereinrichtungen (SC₁, SC₂) an verschiedenen Orten untergebracht sind und sich gegenseitig überwachen.

## Claims

1. Apparatus for the substitute-switching of a switching system,
**characterized in that**
a redundant switching system (S_{1b}) is assigned to each switching system (S₁) as a redundancy partner, both of which have access to a transport network,
**in that** a network management system (NM) and at least one monitor (SC) with real-time capability are provided and are operatively connected to one another as well as to each of the switching systems (S₁), the respectively redundant switching systems (S_{1b}) and the transport network,
**in that** the switching system (S₁) and the respectively redundant switching system (S_{1b}) have packet-based interfaces,
the respectively redundant switching system (S_{1b}) being able to be transferred to a state which is active in terms of switching by the at least one monitor (SC) with real-time capability by activating the packet-based interfaces,
**in that** the packet addresses (IP addresses) of the packet-based interfaces of the switching system (S₁) and of the respective packet-based partner interfaces of the redundant switching system (S_{1b}) are identical,
**in that** there is a considerable spatial separation of the network management system (NM) and the at least one monitor (SC) with real-time capability from the switching system (S₁) and the respectively redundant switching system (S_{1b}).

2. Apparatus according to Claim 1,
**characterized in that**
the switching system (S₁) and the redundant switching system (S_{1b}) have an identical structure in terms of hardware and software.

3. Apparatus according to Claims 1 and 2,
**characterized in that**
the database of the switching system (S₁) and of the redundant switching system (S_{1b}) is substantially identical with regard to permanent/semi-permanent data at any time.

4. Apparatus according to Claims 1 to 3,
**characterized in that**
the configuration formed from the switching system (S₁), the redundant switching system (S_{1b}), the network management system (NM) and the at least one monitor (SC) is distributed over a plurality of locations.

5. Apparatus according to Claims 1 to 4,
**characterized in that**
the switching system (S₁) and the respectively redundant switching system (S_{1b}) have TDM interfaces.

6. Apparatus according to one of the preceding claims,
**characterized in that**
the redundant switching system (S_{1b}) assumes an operating state (hot-standby) which is **characterized by** the presence of a substantially up-to-date database, active applications and by the blocking of all external packet-based interfaces which are used in terms of switching.

7. Apparatus according to one of the preceding claims,
**characterized in that**
the transport network has at least one cross-connect apparatus (CC) which can be controlled by NM or SC and is intended to switch through TDM connections.

8. Apparatus according to Claim 7,
the cross-connect apparatus (CC) being suitable for changing over the entire TDM traffic between the switching system (S₁) and the respectively redundant switching system (S_{1b}).

9. Apparatus according to one of the preceding claims,
**characterized in that**
the transport network has a direct communication interface between the switching system (S₁) and the switching system (S_{1b}).

10. Apparatus according to Claim 9,
the direct communication interface being able to be used to update the database with regard to SCI and charge data and to interchange transient data from individual connections or important further transient data.

11. Apparatus according to one of the preceding claims,
**characterized in that**
the at least one monitor (SC) with real-time capability is outside the switching system (S₁) and the respectively redundant switching system (S_{1b}).

12. Apparatus according to one of the preceding claims,
**characterized in that**
the at least one monitor (SC) with real-time capability consists of two control devices (SC₁, SC₂),
the two control devices (SC₁, SC₂) being accommodated at different locations and monitoring one another.

## Revendications

1. Dispositif pour réaliser la commutation de remplacement d'un système de commutation, **caractérisé en ce qu'**est associé, à chaque système de commutation (S₁), un système de commutation redondant (S_{1b}) en tant que partenaire de redondance, les deux ayant accès à un réseau de transport, **en ce que** sont prévus un système de gestion de réseau (NM) et au moins un moniteur apte au temps réel (SC) qui sont en liaison active entre eux et avec chacun des systèmes de commutation (S₁), les systèmes de commutation respectivement redondants (S_{1b}) et le réseau de transport, **en ce que** le système de commutation (S₁) et le système de commutation respectivement redondant (S_{1b}) présentent des interfaces basées paquets, le système de commutation respectivement redondant (S_{1b}) pouvant être mis dans un état actif en termes de technique de commutation par l'au moins un moniteur apte au temps réel (SC) par activation des interfaces basées paquets, **en ce que** les adresses de paquets (adresses IP) des interfaces basées paquets du système de commutation (S₁) et les interfaces partenaires respectives basées paquets du système de commutation redondant (S_{1b}) sont identiques, et **en ce qu'**il y a une séparation spatiale claire entre le système de commutation (S₁) et le système de commutation respectivement redondant (S_{1b}), le système de gestion de réseau (NM) et l'au moins un moniteur apte au temps réel (SC).

2. Dispositif selon la revendication 1, **caractérisé en ce que** le système de commutation (S₁) et le système de commutation redondant (S_{1b}) présentent une structure identique en termes de matériel et de logiciel.

3. Dispositif selon la revendication 1, 2, **caractérisé en ce que** la base de données du système de commutation (S₁) et celle du système de commutation redondant (S_{1b}) sont sensiblement identiques à tout moment en ce qui concerne des données permanentes / semi-permanentes.

4. Dispositif selon les revendications 1 à 3, **caractérisé en ce que** la configuration réalisée par le système de commutation (S₁), le système de commutation redondant (S_{1b}), le système de gestion de réseau (NM) et l'au moins un moniteur (SC) est répartie sur plusieurs sites.

5. Dispositif selon les revendications 1 à 4, **caractérisé en ce que** le système de commutation (S₁) et le système de commutation respectivement redondant (S_{1b}) présentent des interfaces TDM.

6. Dispositif selon l'une des revendications précédentes, **caractérisé en ce que** le système de commutation redondant (S_{1b}) se met dans un état de fonctionnement (secours automatique) qui est caractérisé, vers l'extérieur, par la présence d'une base de données sensiblement actuelle, des applications actives et le blocage de toutes les interfaces basées paquets qui sont utilisées en termes de technique de commutation.

7. Dispositif selon l'une des revendications précédentes, **caractérisé en ce que** le réseau de transport comporte au moins un dispositif d'interconnexion (CC) commandable par NM ou SC pour interconnecter les liaisons TDM.

8. Dispositif selon la revendication 7, dans lequel le dispositif d'interconnexion (CC) est adapté pour commuter l'ensemble du trafic TDM entre le système de commutation (S₁) et le système de commutation respectivement redondant (S_{1b}).

9. Dispositif selon l'une des revendications précédentes, **caractérisé en ce que** le réseau de transport comporte une interface de communication directe entre le système de commutation (S₁) et le système de commutation (S_{1b}).

10. Dispositif selon la revendication 9, dans lequel l'interface de communication directe peut être utilisée pour mettre à jour la base de données en ce qui concerne les données SCI et de tarifs ainsi que pour échanger des données transitoires de certaines liaisons ou d'autres données transitoires essentielles.

11. Dispositif selon l'une des revendications précédentes, **caractérisé en ce que** l'au moins un moniteur apte au temps réel (SC) se situe en dehors du système de commutation (S₁) et du système de commutation respectivement redondant (S_{1b}).

12. Dispositif selon l'une des revendications précédentes, **caractérisé en ce que** l'au moins un moniteur apte au temps réel (SC) se compose de deux dispositifs de commande (SC₁, SC₂), les deux dispositifs de commande (SC₁, SC₂) étant logés à des endroits différents et se surveillant mutuellement.
